# EUROPEAN PATENT APPLICATION

(11) **EP 4 693 604 A1**
(43) Date of publication of application: **11.02.2026**
(21) Application number: 25188030.8
(22) Date of filing: 08.07.2025
(51) Int. Cl.: H01M 10/48, H01M 10/613, H01M 10/6557, H01M 50/569

(54) **STORAGE BATTERY APPARATUS**

(30) Priority: 05.08.2024 JP 2024128881
(71) Applicant: TOYOTA JIDOSHA KABUSHIKI KAISHA, Toyota-shi, Aichi-ken 471-8571 (JP)
(72) Inventor: HIRATA, Yuki, Toyota-shi, Aichi-ken, 471-8571 (JP); UTSUMI, Shintaro, Toyota-shi, Aichi-ken, 471-8571 (JP); KUME, Yoshinobu, Toyota-shi, Aichi-ken, 471-8571 (JP); KADOKURA, Yuki, Kariya, Aichi-ken, 448-8650 (JP); NIWA, Takashi, Kariya, Aichi-ken, 448-8650 (JP)
(74) Representative: TBK

(57) **Abstract**

A storage battery apparatus (10) may suppress non-uniformity of temperature distributions in in-plane directions of a cooler (30) in which coolant flows between stacked plates. The storage battery apparatus (10) includes a first battery cell (22) and the cooler (30). The cooler (30) is disposed to oppose the first battery cell (22) and includes a first plate (40), a second plate (50) and a first inlet (32). The second plate (50) is stacked at the first battery cell side of the first plate (40) and contacts the first battery cell (22) directly or via a first heat conduction member (76). The first inlet (32) is formed by the first plate (40) and the second plate (50). A first coolant flows in at the first inlet (32). The second plate (50) includes a first region (54), formed adjacent to a first coolant inflow direction downstream side of the first inlet (32), and a first recess portion (56), which is formed in the first region (54) to be recessed toward the first plate (40).

## Description

### BACKGROUND

### Technical Field

The present invention relates to a storage battery apparatus.

### Related Art

Battery packs to be used as power sources for cars have been known since heretofore, for example, as disclosed in Japanese Patent Application Laid-Open (JP-A) No. 2007-305425. A negative electrode current collector and a positive electrode current collector structuring a battery pack also function as heat dissipation members, by a cooling medium flowing inside the current collectors.

However, in a cooler in which coolant flows between stacked plates, temperature distributions in in-plane directions may be nonuniform, which may effectively lower cooling performance.

Accordingly, the present disclosure provides a storage battery apparatus that may suppress non-uniformity of temperature distributions in in-plane directions in a cooler in which coolant flows between stacked plates.

### SUMMARY

A storage battery apparatus according to a first aspect of the present disclosure includes a first battery cell and a cooler disposed to oppose the first battery cell. The cooler includes: a first plate; a second plate stacked at a side of the first plate at which the first battery cell is disposed, the second plate being in contact with the first battery cell directly or via a first heat conduction member; and a first inlet formed by the first plate and the second plate, a first coolant flowing in at the first inlet. The second plate includes: a first region formed adjacent to the first inlet at a first coolant inflow direction downstream side of the first inlet; and a first recess portion formed in the first region so as to be recessed toward a side at which the first plate is disposed.

According to the first aspect, the cooler that is disposed to oppose the first battery cell includes the first plate, the second plate, and the first inlet formed by the first plate and second plate. The first coolant flows in through the first inlet.

The second plate is stacked at the side of the first plate at which the first battery cell is disposed, and the second plate is in contact with the first battery cell directly or via the first heat conduction member. The second plate includes the first recess portion in the first region that is formed adjacent to the first inlet at the first coolant inflow direction downstream side of the first inlet. The first recess portion is formed to be recessed toward the side at which the first plate is disposed.

Thus, a contact area (contact proportion) of the first region of the second plate with the first battery cell is reduced by the first recess portion. Therefore, heat resistance at the first region is increased and heat received from the first battery cell at the first region is reduced. That is, heat exchange to the first coolant at the first region is suppressed, and the first coolant is supplied to central portions of the first plate and second plate while still at a low temperature. As a result, non-uniformity of temperature distributions in in-plane directions in the cooler is suppressed.

In a storage battery apparatus according to a second aspect of the present disclosure, in the storage battery apparatus according to the first aspect, a first protrusion portion is formed at a face of the first region at the side at which the first plate is disposed, at a same location as the first recess portion, the first protrusion portion forming a bump toward the side at which the first plate is disposed.

According to the second aspect, the first protrusion portion is formed at the face of the first region at the side at which the first plate is disposed. The first protrusion portion is a bump toward the side at which the first plate is disposed, at a same location as the first recess portion. That is, the first recess portion and the first protrusion portion may be formed by press-forming. Therefore, the second plate including the first recess portion and the first protrusion portion is easy to fabricate.

In a storage battery apparatus according to a third aspect of the present disclosure, in the storage battery apparatus according to the first aspect or the second aspect, an electrical wire is disposed at at least a portion of the first recess portion.

According to the third aspect, because the electrical wire is disposed at at least a portion of the first recess portion, a total height of the storage battery apparatus may be reduced compared to a structure in which an electrical wire is disposed in a region in which no first recess portion is formed.

In a storage battery apparatus according to a fourth aspect of the present disclosure, in the storage battery apparatus according to the third aspect, a temperature sensor is disposed at a side of the second plate at which the first battery cell is disposed, the temperature sensor being electrically connected to the electrical wire.

According to the fourth aspect, because the temperature sensor that is electrically connected with the electrical wire is disposed at a side of the second plate at which the first battery cell is disposed, temperatures between the cooler and the first battery cell may be detected accurately.

**In** a storage battery apparatus according to a fifth aspect of the present disclosure, the storage battery apparatus according to any one of the first to fourth aspects further includes a second battery cell disposed to oppose the cooler at an opposite side of the cooler from the side at which the first battery cell is disposed. The cooler further includes: a third plate stacked at a side of the first plate at which the second battery cell is disposed, the third plate being in contact with the second battery cell directly or via a second heat conduction member; and a second inlet formed by the first plate and the third plate, a second coolant flowing in at the second inlet. The third plate includes: a second region formed adjacent to the second inlet at a second coolant inflow direction downstream side of the second inlet; and a second recess portion formed in the second region so as to be recessed toward the side at which the first plate is disposed.

According to the fifth aspect, the second battery cell is disposed to oppose the cooler at an opposite side of the cooler from the side at which the first battery cell is disposed. Thus, the cooler is disposed at a side of the first plate at which the second battery cell is disposed. The cooler includes the third plate that is in contact with the second battery cell directly or via the second heat conduction member, and the second inlet that is formed by the first plate and the third plate. The second coolant flows into the cooler through the second inlet. The third plate includes the second recess portion in the second region that is formed adjacent to the second inlet at the second coolant inflow direction downstream side of the second inlet. The second recess portion is formed to be recessed toward the side at which the first plate is disposed.

Thus, a contact area (contact proportion) of the second region of the third plate with the second battery cell is reduced by the second recess portion. Therefore, heat resistance at the second region increases and heat received from the second battery cell at the second region is reduced. That is, heat exchange to the second coolant at the second region is suppressed, and the second coolant is supplied to central portions of the first plate and third plate while still at a low temperature. As a result, non-uniformity of temperature distributions in in-plane directions in the cooler is suppressed.

**In** a storage battery apparatus according to a sixth aspect of the present disclosure, in the storage battery apparatus according to the fifth aspect, a second protrusion portion is formed at a face of the second region at the side at which the first plate is disposed, at a same location as the second recess portion, the second protrusion portion forming a bump toward the side at which the first plate is disposed.

According to the sixth aspect, the second protrusion portion is formed at the face of the second region at the side at which the first plate is disposed. The second protrusion portion is a bump toward the side at which the first plate is disposed, at a same location as the second recess portion. That is, the second recess portion and the second protrusion portion may be formed by press-forming. Therefore, the third plate including the second recess portion and the second protrusion portion is easy to fabricate.

In a storage battery apparatus according to a seventh aspect of the present disclosure, in the storage battery apparatus according to the fifth aspect or the sixth aspect, the cooler includes: a first outlet formed by the first plate and the second plate, the first coolant that has flowed in through the first inlet and flowed between the first plate and the second plate flowing out at the first outlet; and a second outlet formed by the first plate and the third plate, the second coolant that has flowed in through the second inlet and flowed between the first plate and the third plate flowing out at the second outlet, and the first inlet and first outlet, and second inlet and second outlet, are disposed to be mutually offset.

According to the seventh aspect, the cooler includes the first outlet formed by the first plate and the second plate and the second outlet formed by the first plate and the third plate. The first coolant that flows in through the first inlet and flows between the first plate and second plate flows out through the first outlet, and the second coolant that flows in through the second inlet and flows between the first plate and third plate flows out through the second outlet. The first inlet, first outlet, second inlet and second outlet are arranged to be offset from one another.

Therefore, for example, compared to a structure in which the first inlet and the second outlet overlap and the first outlet and the second inlet overlap, heat exchange to the first coolant at the first inlet is suppressed and heat exchange to the second coolant at the second inlet is suppressed. Thus the first coolant is supplied to the central portions of the first plate and second plate while still at a low temperature, and the second coolant is supplied to the central portions of the first plate and third plate while still at a low temperature. As a result, non-uniformity of temperature distributions in in-plane directions of the cooler is suppressed effectively.

In a storage battery apparatus according to an eighth aspect of the present disclosure, in the storage battery apparatus according any one of the fifth to seventh aspects, the first battery cell and the second battery cell are electrically connected via the cooler.

According to the eighth aspect, the first battery cell and the second battery cell are electrically connected via the cooler. That is, the cooler itself constitutes a portion of an electrical circuit, and this portion of the electrical circuit is cooled effectively. Thus, the first battery cell and the second battery cell are cooled effectively and cooling efficiency is improved.

In a storage battery apparatus according to a ninth aspect of the present disclosure, in the storage battery apparatus according to the eighth aspect, an electrically conductive adhesive is provided in each of a region between the first battery cell and the second plate in which the first heat conduction member is not provided, and a region between the second battery cell and the third plate in which the second heat conduction member is not provided.

According to the ninth aspect, the electrically conductive adhesive is provided respectively in regions between the first battery cell and the second plate in which the first heat conduction member is not provided and in regions between the second battery cell and the third plate in which the second heat conduction member is not provided. Therefore, contact characteristics between the cooler and the first battery cell and between the cooler and the second battery cell are improved and electrical resistances are lowered. As a result, current variations in the electrical circuit are reduced, and non-uniformity of temperature distributions in in-plane directions of the cooler is suppressed effectively.

In a storage battery apparatus according to a tenth aspect of the present disclosure, in the storage battery apparatus according to any one of the fifth to ninth aspects, the first heat conduction member is provided between the first battery cell and the second plate, and the second heat conduction member is provided between the second battery cell and the third plate, and areas of the first heat conduction member and the second heat conduction member are greater at central portions of the second plate and the third plate than at end portions of the second plate and the third plate.

According to the tenth aspect, the first heat conduction member is provided between the first battery cell and the second plate, and the second heat conduction member is provided between the second battery cell and the third plate. Areas of the first heat conduction member and the second heat conduction member are greater at the central portions of the second plate and third plate than at the end portions of the second plate and third plate. That is, the heat conduction members are provided to be larger at the central portions of the second plate and the third plate, at which heat is relatively likely to be retained. As a result, non-uniformity of temperature distributions in in-plane directions of the cooler is suppressed more effectively.

According to the present disclosure, as described above, non-uniformity of temperature distributions in in-plane directions in a cooler in which coolant flows between stacked plates may be suppressed.

### BRIEF DESCRIPTION OF THE DRAWINGS

Exemplary embodiments of the present invention will be described in detail based on the following figures, wherein:
Fig. 1 is a schematic perspective view showing a storage battery apparatus according to a present exemplary embodiment;
Fig. 2 is a schematic exploded perspective view showing a cooler of the storage battery apparatus according to the present exemplary embodiment;
Fig. 3 is a schematic exploded perspective view of the cooler of the storage battery apparatus according to the present exemplary embodiment, in which a first region, a flat region and a second region are magnified;
Fig. 4 is a schematic plan view showing flow paths structured by a middle plate and an upper plate of the cooler of the storage battery apparatus according to the present exemplary embodiment;
Fig. 5 is a schematic plan view showing flow paths structured by the middle plate and a lower plate of the cooler of the storage battery apparatus according to the present exemplary embodiment;
Fig. 6 is a schematic magnified perspective view showing a first inlet and first outlet and a second inlet and second outlet of the cooler of the storage battery apparatus according to the present exemplary embodiment;
Fig. 7 is a schematic sectional diagram cut along line X-X in Fig. 6;
Fig. 8 is a schematic perspective view showing a temperature sensor and an electrical wire provided at the upper plate of the cooler of the storage battery apparatus according to the present exemplary embodiment; and
Fig. 9 is a schematic plan view showing application areas of an electrically conductive adhesive in the cooler of the storage battery apparatus according to the present exemplary embodiment.

### DETAILED DESCRIPTION

Below, an exemplary embodiment relating to the present disclosure is described in detail in accordance with the drawings. For convenience of description, the arrow UP that is shown where appropriate in the drawings indicates an upper direction of the storage battery apparatus, the arrow FR indicates a front direction of the storage battery apparatus, and an arrow RH indicates a right direction of the storage battery apparatus. In the descriptions below, where upper and lower, front and rear, and left and right directions are recited without being specified, these indicate upper and lower, front and rear, and left and right of the storage battery apparatus. However, these directions are not particularly limited.

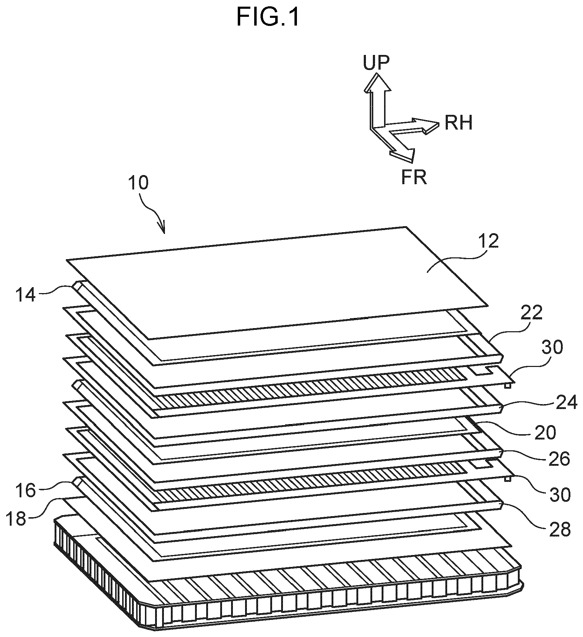

As shown in Fig. 1, a storage battery apparatus 10 according to the present exemplary embodiment is structured by an insulating sheet 12, an upper side current collector 14, a first battery cell 22, a cooler 30, a second battery cell 24, a current conduction plate 20, a third battery cell 26, another of the cooler 30, a fourth battery cell 28, a lower side current collector 16 and an insulating sheet 18 that oppose one another (are stacked) in the vertical direction in this order from the upper side. These members have substantially rectangular flat plate shapes of substantially the same sizes.

The cooler 30 between the first battery cell 22 and the second battery cell 24 and the cooler 30 between the third battery cell 26 and the fourth battery cell 28 have the same functions. Accordingly, descriptions below are given using the cooler 30 between the first battery cell 22 and the second battery cell 24 as an example.

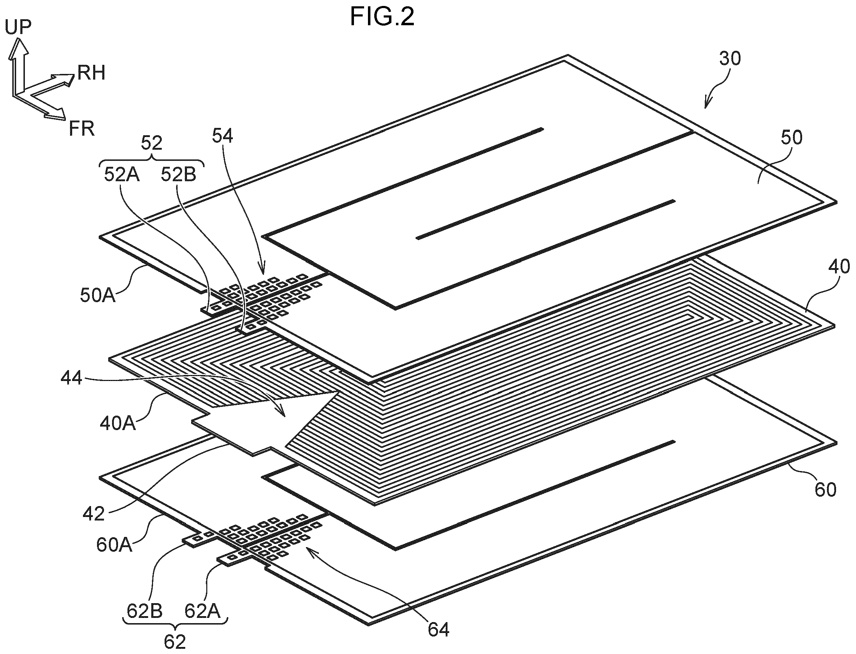

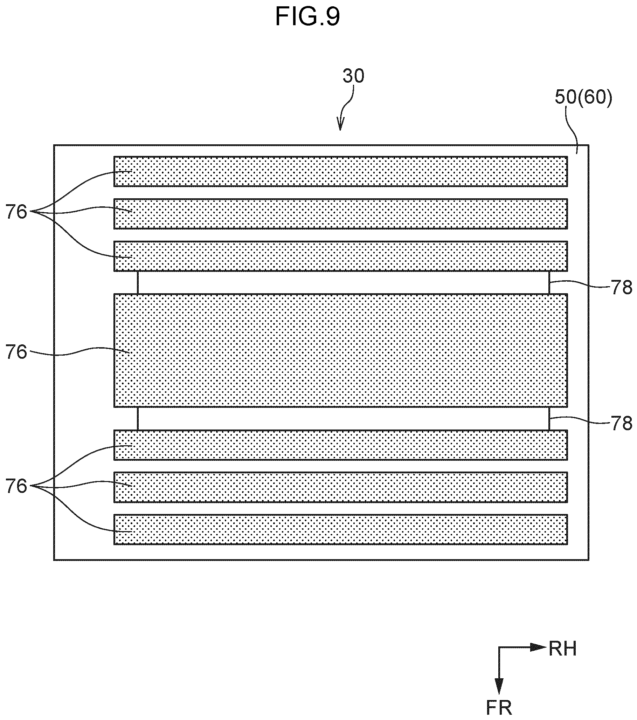

As shown in Fig. 2, the cooler 30 includes a middle plate 40 that serves as a first plate, an upper plate 50 that serves as a second plate, and a lower plate 60 that serves as a third plate. The cooler 30 is structured by these plates being stacked in the vertical direction. The upper plate 50 is in contact with and bonded to the first battery cell 22 via an electrically conductive adhesive 76 (see Fig. 9) that serves as a first heat conduction member. Similarly, the lower plate 60 is in contact with and bonded to the second battery cell 24 via the electrically conductive adhesive 76 (see Fig. 9), serving as a second heat conduction member.

As shown in Fig. 9, application areas of the electrically conductive adhesive 76 on the upper plate 50 and the lower plate 60 are larger at central portions than at front and rear end portions. An electrically conductive adhesive 78 may be provided in regions between the first battery cell 22 and the upper plate 50 in which the electrically conductive adhesive 76 is not provided and in regions between the second battery cell 24 and the lower plate 60 in which the electrically conductive adhesive 76 is not provided.

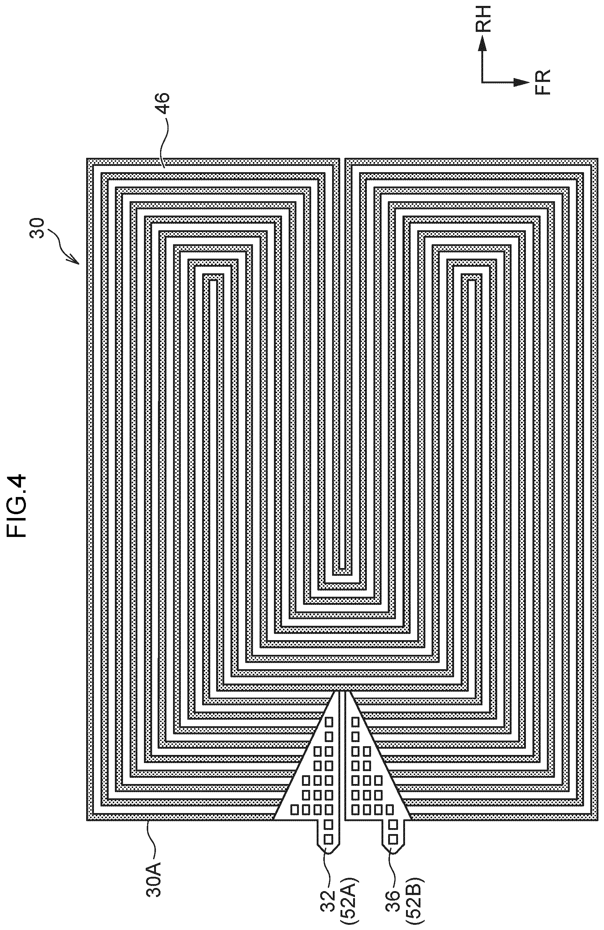

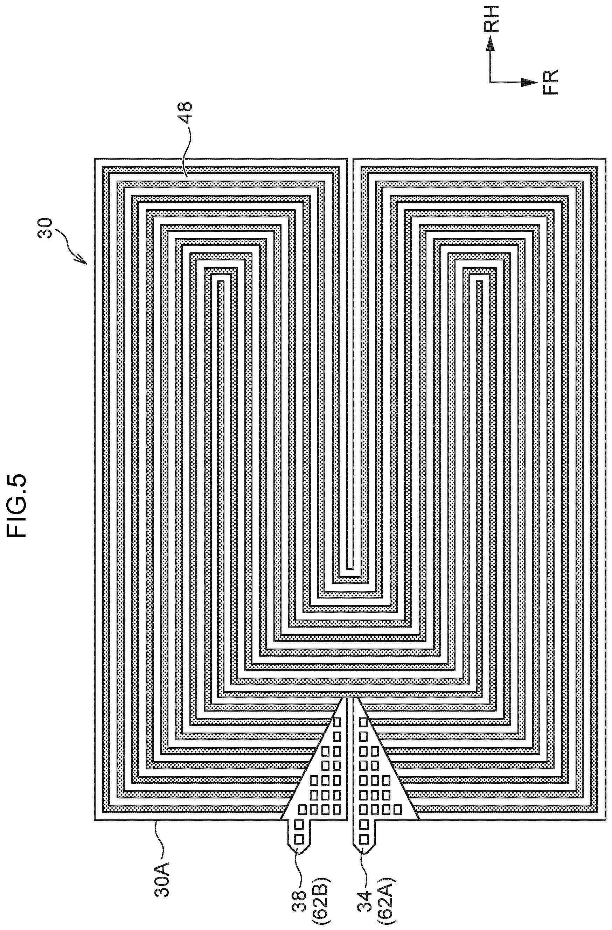

As shown in Fig. 4 and Fig. 5, a first inlet 32, a first outlet 36, a second inlet 34 and a second outlet 38 are provided at one short side edge 30A of the cooler 30 (at the left side in the drawings). The first inlet 32 and first outlet 36 are formed by the middle plate 40 and upper plate 50 illustrated in Fig. 2, and the second inlet 34 and second outlet 38 are formed by the middle plate 40 and lower plate 60 illustrated in Fig. 2.

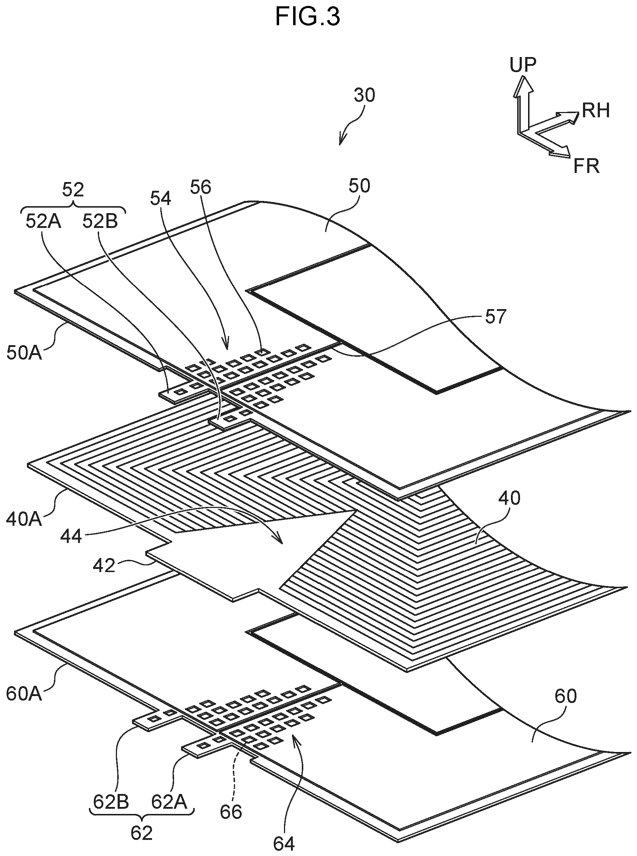

To describe this more specifically, as shown in Fig. 2 and Fig. 3, a flat plate portion 42 is integrally formed at one short side edge 40A of the middle plate 40 (at the left side in the drawings). The flat plate portion 42 is substantially rectangular in plan view and projects to an outer side (to the left side in the drawings). A pair of projecting portions 52 (52A and 52B) are integrally formed at one short side edge 50A of the upper plate 50 (at the left side in the drawings). The projecting portions 52 are separated in the front-and-rear direction, are substantially rectangular in plan view, and project to the outer side (to the left side in the drawings). A pair of projecting portions 62 (62A and 62B) are integrally formed at one short side edge 60A of the lower plate 60 (at the left side in the drawings). The projecting portions 62 are separated in the front-and-rear direction, are substantially rectangular in plan view, and project to the outer side (to the left side in the drawings).

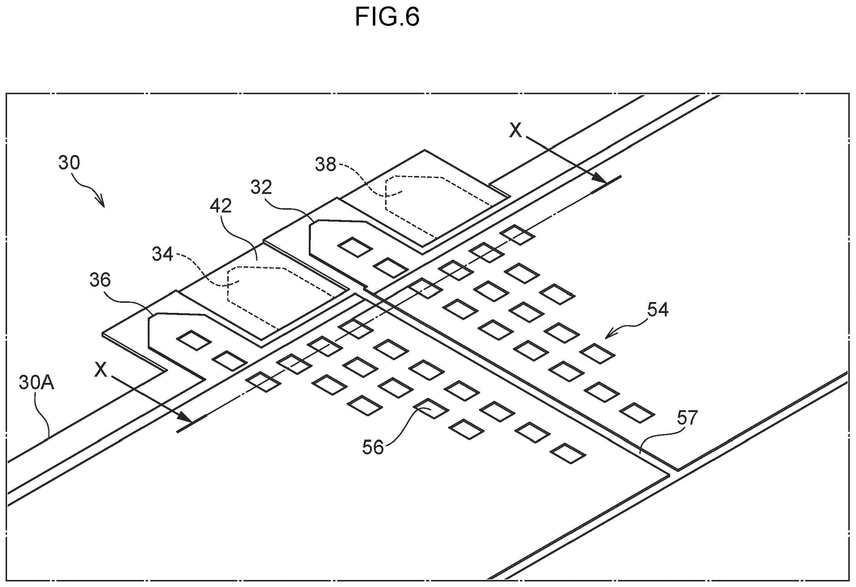

Thus, as illustrated in Fig. 6, the first inlet 32 and first outlet 36 are formed by the projecting portions 52A and 52B of the upper plate 50 and the flat plate portion 42 of the middle plate 40, and the second inlet 34 and second outlet 38 are formed by the projecting portions 62A and 62B of the lower plate 60 and the flat plate portion 42 of the middle plate 40.

When the projecting portions 52A and 52B of the upper plate 50 and the projecting portions 62A and 62B of the lower plate 60 are stacked, the same protrude at positions that are disposed to be mutually offset. That is, a structure is formed in which the first inlet 32, first outlet 36, second inlet 34 and second outlet 38 are disposed to be adjacent but offset from one another.

More specifically, the first inlet 32 and second inlet 34 are provided to be adjacent to front and rear at a front-and-rear direction central portion of the short side edge 30A of the cooler 30. The first outlet 36 and the second outlet 38 are provided to be shifted to the front side and rear side of the short side edge 30A of the cooler 30 relative to, respectively, the first inlet 32 and the second inlet 34 by at least the widths (lengths in the front-and-rear direction) of the second inlet 34 and first inlet 32.

A first coolant, which is cooling water or the like, flows in through the first inlet 32, flows through channels 46 formed between the middle plate 40 and the upper plate 50 (see

Fig. 4), and then flows out through the first outlet 36. Similarly a second coolant, which is cooling water or the like, flows in through the second inlet 34, flows through channels 48 formed between the middle plate 40 and the lower plate 60 (see Fig. 5), and then flows out through the second outlet 38. That is, a direction in which the first coolant flows and a direction in which the second coolant flows are opposite directions in plan view (one is a clockwise direction and the other is a counterclockwise direction).

As shown in Fig. 2 and Fig. 3, a first region 54 that is formed substantially in an isosceles triangle shape in plan view is formed at the one short side edge 50A of the upper plate 50. The first region 54 is adjacent to a first coolant inflow direction downstream side of the first inlet 32 (and a first coolant outflow direction upstream side of the first outlet 36). A second region 64 that is formed substantially in an isosceles triangle shape in plan view is formed at the one short side edge 60A of the lower plate 60. The second region 64 is adjacent to a second coolant inflow direction downstream side of the second inlet 34 (and a second coolant outflow direction upstream side of the second outlet 38).

A flat region 44 substantially in an isosceles triangle shape in plan view is formed at the one short side edge 40A of the middle plate 40. The flat region 44 is continuous with the flat plate portion 42. Thus, an upper face of the flat region 44 opposes the first region 54 in the vertical direction, and a lower face of the flat region 44 opposes the second region 64 in the vertical direction.

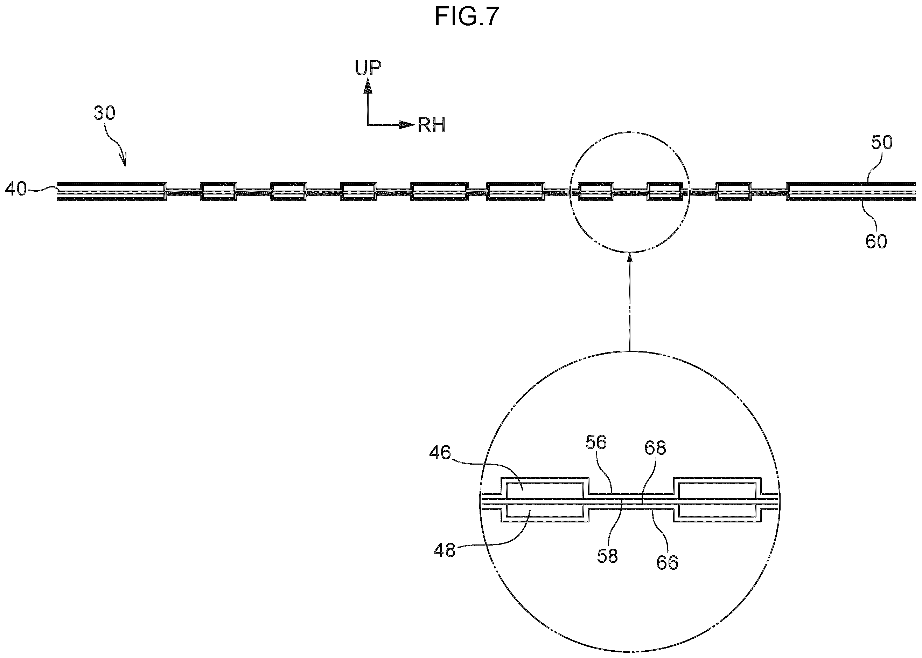

Plural first recess portions 56 are formed in the first region 54 of the upper plate 50. The first recess portions 56 are recessed, in substantially rectangular shapes in plan view, towards the side at which the middle plate 40 is disposed (the side at which the flat region 44 is disposed). Thus, plural first protrusion portions 58 (see Fig. 7) are formed in the first region 54 of the upper plate 50, on the face at the side at which the middle plate 40 is disposed (the side at which the flat region 44 is disposed), at a same locations as the first recess portions 56. The first protrusion portions 58 are bumps, in substantially rectangular shapes in bottom view, towards the side at which the middle plate 40 is disposed (the side at which the flat region 44 is disposed).

Similarly, plural second recess portions 66 are formed in the second region 64 of the lower plate 60. The second recess portions 66 are recessed, in substantially rectangular shapes in bottom view, towards the side at which the middle plate 40 is disposed (the side at which the flat region 44 is disposed). Thus, plural second protrusion portions 68 (see Fig. 7) are formed in the second region 64 of the lower plate 60, on the face at the side at which the middle plate 40 is disposed (the side at which the flat region 44 is disposed), at a same locations as the second recess portions 66. The second protrusion portions 68 are bumps, in substantially rectangular shapes in plan view, towards the side at which the middle plate 40 is disposed (the side at which the flat region 44 is disposed).

As shown in Fig. 7, the first protrusion portions 58 and the second protrusion portions 68 sandwich the flat region 44 of the middle plate 40 and abut against the flat region 44 in the vertical direction. Portions of the channels 46 through which the first coolant passes and portions of the channels 48 through which the second coolant passes are formed, respectively, between the first protrusion portions 58 and between the second protrusion portions 68.

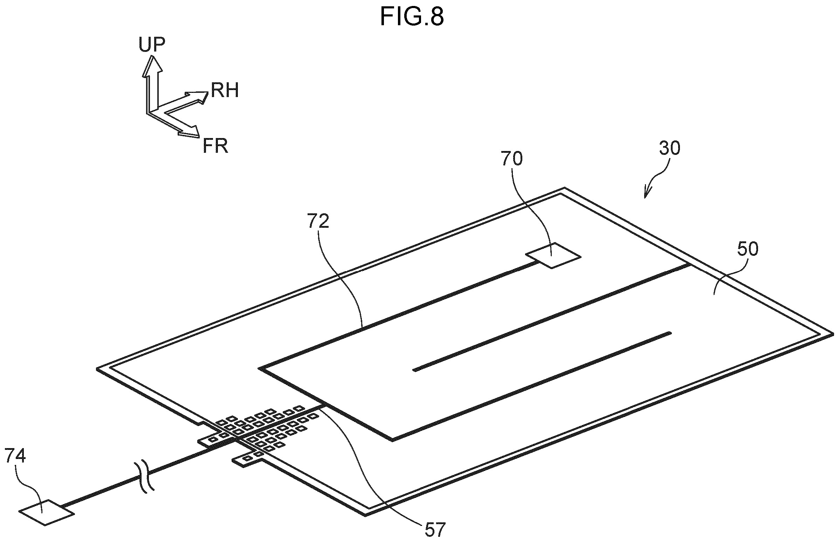

As shown in Fig. 8, a temperature sensor 70 is disposed at a predetermined position of the upper plate 50, at the side at which the first battery cell 22 is disposed. An electrical wire 72 is electrically connected to the temperature sensor 70. The electrical wire 72 is disposed in an electrical wire recess portion 57 that is formed so as to extend in the left-and-right direction at a front-and-rear direction central portion of the first region 54, is routed to outside the upper plate 50, and is electrically connected to a detector 74.

This electrical wire recess portion 57 is not formed in a substantially rectangular shape in plan view but in the present exemplary embodiment serves as a portion of the plural first recess portions 56 formed in the first region 54. Although not shown in the drawings, a temperature sensor and electrical wire are similarly disposed at a side of the lower plate 60 at which the second battery cell 24 is disposed, and an electrical wire recess portion that extends in the left-and-right direction is formed in a front-and-rear direction central portion of the second region 64. This electrical wire recess portion is also not formed in a substantially rectangular shape in bottom view but in the present exemplary embodiment serves as a portion of the plural second recess portions 66 formed in the second region 64.

Operation of the storage battery apparatus 10 according to the present exemplary embodiment with the structure described above is now described.

As described above, the cooler 30 is disposed to vertically oppose the first battery cell 22 and is stacked with the middle plate 40 at the side of the middle plate 40 at which the first battery cell 22 is disposed. The cooler 30 includes the upper plate 50 that is in contact with the first battery cell 22 via the electrically conductive adhesive 76, and the first inlet 32 that is formed by the middle plate 40 and the upper plate 50. The first coolant flows into the cooler 30 through the first inlet 32. The upper plate 50 includes the first recess portions 56 that are formed so as to be recessed toward a side at which the middle plate 40 is disposed (the side at which the flat region 44 is disposed) in the first region 54 that is formed adjacent to the first coolant inflow direction downstream side of the first inlet 32.

Thus, a contact area (contact proportion) of the first region 54 of the upper plate 50 with the first battery cell 22 is reduced by the first recess portions 56. Therefore, heat resistance at the first region 54 increases and heat received from the first battery cell 22 at the first region 54 is reduced. That is, heat exchange to the first coolant at the first region 54 is suppressed, and the first coolant is supplied to central portions of the middle plate 40 and upper plate 50 while still at a low temperature. As a result, non-uniformity of temperature distributions in in-plane directions in the cooler 30 at the side at which the upper plate 50 is disposed may be suppressed.

The cooler 30 opposes the second battery cell 24 at the opposite side of the cooler 30 from the side at which the first battery cell 22 is disposed. That is, the cooler 30 is stacked at the side of the middle plate 40 at which the second battery cell 24 is disposed. The cooler 30 includes the lower plate 60 that is in contact with the second battery cell 24 via the electrically conductive adhesive 76, and the second inlet 34 that is formed by the middle plate 40 and the lower plate 60. The second coolant flows into the cooler 30 through the second inlet 34. The lower plate 60 includes the second recess portions 66 that are formed so as to be recessed toward the side at which the middle plate 40 is disposed (the side at which the flat region 44 is disposed) in the second region 64 that is formed adjacent to the second coolant inflow direction downstream side of the second inlet 34.

Thus, a contact area (contact proportion) of the second region 64 of the lower plate 60 with the second battery cell 24 is reduced by the second recess portions 66. Therefore, heat resistance at the second region 64 increases and heat received from the second battery cell 24 at the second region 64 is reduced. That is, heat exchange to the second coolant at the second region 64 is suppressed, and the second coolant is supplied to central portions of the middle plate 40 and lower plate 60 while still at a low temperature. As a result, non-uniformity of temperature distributions in in-plane directions in the cooler 30 at the side at which the lower plate 60 is disposed may be suppressed.

The cooler 30 also includes the first outlet 36 formed by the middle plate 40 and upper plate 50 and the second outlet 38 formed by the middle plate 40 and lower plate 60. Accordingly, the first coolant flowing in through the first inlet 32 and flowing between the middle plate 40 and upper plate 50 flows out through the first outlet 36, and the second coolant flowing in through the second inlet 34 and flowing between the middle plate 40 and lower plate 60 flows out through the second outlet 38. The first inlet 32 and first outlet 36, and the second inlet 34 and second outlet 38, are disposed to be mutually offset.

Therefore, heat exchange to the first coolant at the first inlet 32 and heat exchange to the second coolant at the second inlet 34 are suppressed compared to, for example, a structure in which the first inlet 32 and the second outlet 38 vertically overlap and the first outlet 36 and the second inlet 34 vertically overlap. Thus, the first coolant is supplied to the central portions of the middle plate 40 and upper plate 50 while still at a low temperature, and the second coolant is supplied to the central portions of the middle plate 40 and lower plate 60 while still at a low temperature. As a result, non-uniformity of temperature distributions in in-plane directions of the cooler 30 may be suppressed more effectively, and a lowering of cooling performance of the cooler 30 may be suppressed.

The electrically conductive adhesive 76 is provided between the first battery cell 22 and the upper plate 50 to serve as the first heat conduction member, and the electrically conductive adhesive 76 is provided between the second battery cell 24 and the lower plate 60 to serve as the second heat conduction member. Application areas of the electrically conductive adhesive 76 on the upper plate 50 and the lower plate 60 are larger at the central portions than at the front and rear end portions.

That is, the electrically conductive adhesive 76 is applied more widely at the central portions of the upper plate 50 and lower plate 60, at which heat is relatively likely to be retained. As a result, non-uniformity of temperature distributions in in-plane directions of the cooler 30 may be suppressed more effectively than in a structure in which application areas of the electrically conductive adhesive 76 at the central portions of the upper plate 50 and lower plate 60 are small similarly to the front and rear end portions of the upper plate 50 and lower plate 60.

When the electrically conductive adhesive 78 is provided in, respectively, regions between the first battery cell 22 and the upper plate 50 in which the electrically conductive adhesive 76 is not provided and regions between the second battery cell 24 and the lower plate 60 in which the electrically conductive adhesive 76 is not provided, contact between the cooler 30 and the first battery cell 22 and between the cooler 30 and the second battery cell 24 may be improved and electrical resistances may be lowered further. As a result, current variations in an electrical circuit may be reduced effectively and non-uniformity of temperature distributions in in-plane directions of the cooler 30 may be suppressed more effectively.

Because the electrically conductive adhesives 76 and 78 are provided, the first battery cell 22 and the second battery cell 24 are effectively electrically connected via the cooler 30. Because the cooler 30 itself constitutes a portion of the electrical circuit, this portion of the electrical circuit may be cooled effectively. Thus, the first battery cell 22 and the second battery cell 24 may be cooled effectively and cooling efficiency may be improved.

Because the temperature sensor 70 that is electrically connected to the electrical wire 72 is disposed at a side of the upper plate 50 at which the first battery cell 22 is disposed, temperatures between the cooler 30 and the first battery cell 22 may be detected accurately. Further, because the electrical wire 72 is disposed in the electrical wire recess portion 57, an overall height of the storage battery apparatus 10 may be reduced compared to a structure in which the electrical wire 72 is disposed at a location at which the electrical wire recess portion 57 is not formed. These points also apply toward the side at which the lower plate 60 is disposed.

The first protrusion portions 58 that form bumps toward the side at which the middle plate 40 is disposed (the side at which the flat region 44 is disposed) are formed, at a same locations as the first recess portions 56, at the face of the first region 54 at the side at which the middle plate 40 is disposed (the side at which the flat region 44 is disposed). Similarly, the second protrusion portions 68 that form bumps toward the side at which the middle plate 40 is disposed (the side at which the flat region 44 is disposed) are formed, at a same locations as the second recess portions 66, at the face of the second region 64 at the side at which the middle plate 40 is disposed (the side at which the flat region 44 is disposed).

Thus, the first recess portions 56 and first protrusion portions 58 and the second recess portions 66 and second protrusion portions 68 may be formed at the same times by press-forming. Therefore, the upper plate 50 including the first recess portions 56 and first protrusion portions 58 and the lower plate 60 including the second recess portions 66 and second protrusion portions 68 may be fabricated easily.

Above, the storage battery apparatus 10 according to the present exemplary embodiment is described on the basis of the attached drawings. However, the storage battery apparatus 10 according to the present exemplary embodiment is not limited to the illustrated structures; suitable design modifications may be applied within a scope not departing from the gist of the present invention. For example, the upper plate 50 may be formed as a structure that is directly in contact with the first battery cell 22 without the electrically conductive adhesives 76 and 78 being interposed, and the lower plate 60 may be formed as a structure that is directly in contact with the second battery cell 24 without the electrically conductive adhesives 76 and 78 being interposed.

The sizes of the first recess portions 56 and second recess portions 66 in the drawings are the same, but this is not limiting. The sizes of the first recess portions 56 and second recess portions 66 may differ between the upper plate 50 and the lower plate 60. That is, a width of the channels 46 of the first region 54 and a width of the channels 48 of the second region 64 may be different, by which means flow amounts of the first coolant and second coolant may be adjusted.

In the present exemplary embodiment, portions of the channels 46 and the channels 48 are formed by the first protrusion portions 58 and the second protrusion portions 68 abutting against the flat region 44. Therefore, modifications of shape in order to adjust flow amounts may be easier than in, for example, a structure in which the first region 54 of the upper plate 50 and the second region 64 of the lower plate 60 are flat and the protrusion and recess portions are formed at predetermined regions of the middle plate 40 opposing the first region 54 and the second region 64. Thus, widths of the channels 46 and 48 may be optimized easily.

## Claims

1. A storage battery apparatus (10) comprising:
a first battery cell (22); and
a cooler (30) disposed to oppose the first battery cell (22),
wherein the cooler (30) includes:
a first plate (40),
a second plate (50) stacked at a side of the first plate (40) at which the first battery cell (22) is disposed, the second plate (50) being in contact with the first battery cell (22) directly or via a first heat conduction member (76), and
a first inlet (32) formed by the first plate (40) and the second plate (50), a first coolant flowing in at the first inlet (32); and
wherein the second plate (50) includes:
a first region (54) formed adjacent to the first inlet (32) at a first coolant inflow direction downstream side of the first inlet (32), and
a first recess portion (56) formed in the first region (54) so as to be recessed toward a side at which the first plate (40) is disposed.

2. The storage battery apparatus (10) according to claim 1, wherein a first protrusion portion (58) is formed at a face of the first region (54) at the side at which the first plate (40) is disposed, at a same location as the first recess portion (56), the first protrusion portion (58) forming a bump toward the side at which the first plate (40) is disposed.

3. The storage battery apparatus (10) according to claim 2, wherein an electrical wire (72) is disposed at at least a portion of the first recess portion (56).

4. The storage battery apparatus (10) according to claim 3, wherein a temperature sensor (70) is disposed at a side of the second plate (50) at which the first battery cell (22) is disposed, the temperature sensor (70) being electrically connected to the electrical wire (72).

5. The storage battery apparatus (10) according to any one of claims 1 to 4, further comprising a second battery cell (24) disposed to oppose the cooler (30) at an opposite side of the cooler (30) from the side at which the first battery cell (22) is disposed,
wherein the cooler (30) further includes:
a third plate (60) stacked at a side of the first plate (40) at which the second battery cell (24) is disposed, the third plate (60) being in contact with the second battery cell (24) directly or via a second heat conduction member (76), and
a second inlet (34) formed by the first plate (40) and the third plate (60), a second coolant flowing in at the second inlet (34); and
wherein the third plate (60) includes:
a second region (64) formed adjacent to the second inlet (34) at a second coolant inflow direction downstream side of the second inlet (34), and
a second recess portion (66) formed in the second region (64) so as to be recessed toward the side at which the first plate (40) is disposed.

6. The storage battery apparatus (10) according to claim 5, wherein a second protrusion portion (68) is formed at a face of the second region (64) at the side at which the first plate (40) is disposed, at a same location as the second recess portion (66), the second protrusion portion (68) forming a bump toward the side at which the first plate (40) is disposed.

7. The storage battery apparatus (10) according to claim 6, wherein the cooler (30) includes:
a first outlet (36) formed by the first plate (40) and the second plate (50), the first coolant that has flowed in through the first inlet (32) and flowed between the first plate (40) and the second plate (50) flowing out at the first outlet (36), and
a second outlet (38) formed by the first plate (40) and the third plate (60), the second coolant that has flowed in through the second inlet (34) and flowed between the first plate (40) and the third plate (60) flowing out at the second outlet (38); and
wherein the first inlet (32) and the first outlet (36), and the second inlet (34) and the second outlet (38), are disposed to be mutually offset.

8. The storage battery apparatus (10) according to claim 7, wherein the first battery cell (22) and the second battery cell (24) are electrically connected via the cooler (30).

9. The storage battery apparatus (10) according to claim 8, wherein an electrically conductive adhesive (78) is provided in each of:
a region between the first battery cell (22) and the second plate (50) in which the first heat conduction member (76) is not provided, and
a region between the second battery cell (24) and the third plate (60) in which the second heat conduction member (76) is not provided.

10. The storage battery apparatus (10) according to claim 9, wherein:
the first heat conduction member (76) is provided between the first battery cell (22) and the second plate (50), and the second heat conduction member (76) is provided between the second battery cell (24) and the third plate (60), and
areas of the first heat conduction member (76) and the second heat conduction member (76) are greater at central portions of the second plate (50) and the third plate (60) than at end portions of the second plate (50) and the third plate (60).
